# EUROPÄISCHE PATENTSCHRIFT

(11) **EP 3 719 295 B1**
(45) Veröffentlichungstag und Bekanntmachung des Hinweises auf die Patenterteilung: **24.11.2021**
(21) Anmeldenummer: 19465519.7
(22) Anmeldetag: 02.04.2019
(51) Int. Cl.: F02M 26/66, F02M 26/69, F02M 26/71, F16K 11/18, F16K 11/14, F16K 11/044, F16K 31/08

(54) **VENTIL ZUM ÖFFNEN UND SCHLIESSEN EINER ABGASLEITUNG UND ABGASFÜHRUNGSSYSTEM**
VALVE FOR OPENING AND CLOSING AN EXHAUST GAS LINE AND EXHAUST GAS GUIDANCE SYSTEM
SOUPAPE D'OUVERTURE ET DE FERMETURE D'UNE CONDUITE DE GAZ D'ÉCHAPPEMENT ET SYSTÈME D'ACHEMINEMENT DES GAZ D'ÉCHAPPEMENT

(43) Veröffentlichungstag der Anmeldung: 07.10.2020
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- EP-A1- 1 275 838
- WO-A1-2006/125259
- US-A- 4 705 070
- US-A- 6 041 764
- US-A1- 2003 075 159

## Beschreibung

Die Erfindung betrifft ein Ventil zum Öffnen und Schließen einer Abgasleitung und ein Abgasführungssystem.

Ventile zum Durchlassen einer Abgasströmung werden unter anderem in Kraftfahrzeugen eingesetzt und sind aus dem Stand der Technik bekannt. Wichtig für die Funktion solcher Ventile ist die Dichtheit, mit der das Ventil die Leitung verschließt. Weiterhin sind eine zuverlässige Bewegung eines Ventilkörpers, welcher eine Abgasleitung zuverlässig freigeben oder verschließen soll, um so das Öffnen und Schließen des Ventils regeln zu können, und eine kontrollierte Führung einer Abgasströmung in die Abgasleitung erforderlich. Der Antrieb eines Stößels und des Ventilkörpers wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel den Ventilkörper linear bewegen und eine zugehörige Abgasleitung öffnen oder verschließen kann.

Ventile sind z.B. aus WO 2006125259 A1, US 4705070 A, US 2003075159 A1, EP 1275838 A1 und US 6041764 A bekannt.

Es ist eine Aufgabe, die der Erfindung zugrunde liegt, ein Konzept für ein Ventil anzugeben, welches im Betrieb eine besonders kontrollierte Führung einer Abgasströmung innerhalb des Ventils und innerhalb eines Abgasführungssystems ermöglicht.

Die Aufgabe wird durch die Merkmale des unabhängigen Patentanspruchs gelöst. Vorteilhafte Ausgestaltungen sind in den Unteransprüchen angegeben.

Gemäß einem Aspekt der Erfindung umfasst ein Ventil zum Öffnen und Schließen einer Abgasleitung ein Gehäuse und einen in dem Gehäuse angeordneten ersten Stößel, der mit einem Antrieb koppelbar ist und ausgebildet ist, mittels des Antriebs entlang einer Längsachse des ersten Stößels bewegt zu werden. Das Ventil weist weiter einen in dem Gehäuse angeordneten zweiten Stößel auf, der beabstandet von dem ersten Stößel ausgebildet ist, entlang einer Längsachse des zweiten Stößels bewegt zu werden. Das Ventil umfasst weiter einen in dem Gehäuse angeordneten ersten und zweiten Ventilsitz, welche jeweils einen Ventilauslass aufweisen, und einen ersten und einen zweiten Ventilkörper, wobei der erste Ventilkörper fest mit dem ersten Stößel und der zweite Ventilkörper fest mit dem zweiten Stößel verbunden ist, sodass der jeweilige Ventilkörper durch eine Bewegung des jeweiliges Stößels zwischen einer Offenstellung, in der der jeweilige Ventilauslass freigegeben ist, und einer Schließstellung betätigbar sind, wobei der erste und der zweite Ventilkörper in entgegengesetzter Richtung von der Offenstellung zur Schließstellung bewegbar sind. Das Ventil weist ferner ein erstes und ein zweites Magnetelement auf, wobei das erste Magnetelement an dem ersten Ventilkörper und das zweite Magnetelement an dem zweiten Ventilkörper angeordnet ist und die Magnetelemente zumindest abschnittsweise eine magnetische Kopplung zwischen dem ersten und dem zweiten Stößel ausbilden. Das Ventil ist so ausgestaltet, dass mittels der kontaktfreien Kopplung der Stößel miteinander, drei verschiedene Positionen der Ventilkörper und somit drei unterschiedliche Zustände des Ventils ausbildbar sind. Die Stößel sind kontaktfrei miteinander gekoppelt, sodass in einem ersten Zustand des Ventils der erste Stößel und der erste Ventilkörper eine Schließstellung und der zweite Stößel und der zweite Ventilkörper eine Offenstellung ausbilden, in einem zweiten Zustand des Ventils der erste Stößel und der erste Ventilkörper sowie der zweite Stößel und der zweite Ventilkörper eine Offenstellung ausbilden, und in einem dritten Zustand des Ventils der erste Stößel und der erste Ventilkörper eine Offenstellung ausbilden und den zweiten Stößel und den zweiten Ventilkörper in eine Schließstellung treiben.

Auf diese Weise kann eine kontaktfreie Kopplung zwischen den Stößeln ausgebildet werden, sodass auf Basis einer magnetischen Kraft eine Bewegung eines Stößels eine Bewegung des anderen Stößels beeinflussen kann. Der erste Stößel ist dazu ausgebildet, mit einem Antrieb gekoppelt und von diesem unmittelbar angetrieben zu werden. Sind die Magnetelemente der Ventilkörper mit einer gleichen Polausrichtung einander zugewandt, so führt eine magnetische Kraft dazu, dass ein Annähern des ersten Stößels und des ersten Ventilkörpers an den zweiten Stößel mit dem zweiten Ventilkörper ab einem gewissen Abstand ein Abstoßen des zweiten Ventilkörpers in eine entsprechende Richtung bedingt. Alternativ kann bei gegenpoliger Ausrichtung der Magnetelemente zueinander eine magnetische Anziehungskraft ausgebildet werden.

Ein unmittelbarer Antrieb des ersten Stößels bildet daher im Zusammenwirken mit der kontaktfreien Kopplung einen mittelbaren Antrieb für den zweiten Stößel aus. Dabei kann in Abhängigkeit der magnetischen Kraft der Magnetelemente vorgegeben werden, ab welcher Distanz eine Bewegung des ersten Stößels und des ersten Ventilkörpers zu einer Bewegung des zweiten Stößels mit dem zweiten Ventilkörper führt.

Mittels des beschriebenen Ventils ist im Betrieb eine besonders kontrollierte Führung einer Abgasströmung in unterschiedliche Abgasleitungen möglich, sodass eine Abgasströmung nutzbringend geführt und weiterverarbeitet werden kann. Das Ventil eignet sich insbesondere für Linearventile, bei denen die beiden Stößel entlang einer Richtung, insbesondere ihrer jeweiligen Längsachsen, linear bewegt werden, sodass ein vorteilhaftes Doppellinearventil realisierbar ist, mit welchem die jeweiligen Ventilauslässe verschließbar oder freigebar sind. Es ist kostengünstig herstellbar, bietet als modulares Konzept einen übersichtlichen und einfachen Aufbau.

Beispielsweise ist das Ventil in einem Abgasrückführsystem eines Kraftfahrzeugs einsetzbar, um Abgasleitungen des Kraftfahrzeugs zu öffnen und zu schließen. Beispielsweise weist ein Abgasrückführsystem eines Kraftfahrzeugs das Ventil auf.

Die Stößel sind so in dem Gehäuse angeordnet und ausgebildet, dass im Wesentlichen eine Öffnungsrichtung des ersten Ventilkörpers einer Schließrichtung des zweiten Ventilkörpers entspricht. Der erste und zweite Stößel werden somit gegenläufig bewegt um einen jeweilige Offenstellung oder Schließstellung auszubilden. Die Stößel und Ventilkörper sind insbesondere einander gegenüberliegend angeordnet, sodass die beiden Stößel eine gemeinsame Längsachse ausbilden.

Gemäß einer Weiterbildung des Ventils sind die Stößel kontaktfrei miteinander gekoppelt, sodass eine Bewegung des ersten Stößels und des ersten Ventilkörpers zumindest abschnittsweise eine Bewegung des zweiten Stößels und des zweiten Ventilkörpers bedingt. Die beiden Stößel und ihre zugehörigen Ventilkörper bilden voneinander mechanisch entkoppelte Schließ- und Öffnungsmechanismen entsprechender Ventilauslässe dar. Die beschriebene kontaktfreie Kopplung spezifiziert, dass eine Bewegung der Stößel zumindest abschnittsweise miteinander gekoppelt ist, aber keine direkte mechanische Verbindung zwischen den Stößeln besteht. Eine solche kontaktfreie Kopplung kann zum Beispiel als elektrische, hydraulische und/oder insbesondere als magnetische Kopplung ausgebildet sein, die auf Basis entsprechender Kraftwirkungen eine Bewegung des jeweiligen Stößels beeinflussen können.

Gemäß einer weiteren Weiterbildung ist das jeweilige Magnetelement als ringförmiger Permanentmagnet ausgebildet und an einer Oberfläche des jeweiligen Ventilkörpers angeordnet ist, die dem jeweiligen anderen Ventilkörper zugewandt ist. Ein solcher Permanentmagnetring kann auf der Oberfläche des jeweiligen Ventilkörper angebracht sein oder sich ganz oder teilweise in den Ventilkörper erstrecken und beispielsweise eine bündigen Oberflächenabschluss innerhalb einer Ausnehmung des Ventilkörpers bilden. Alternativ können die Magnetelemente auch als eine Mehrzahl stabförmiger Permanentmagnete ausgebildet sein, die als Magnetstifte an einer der sich gegenüberliegenden Oberflächen des jeweiligen Ventilkörpers angeordnet sind oder in diesen ganz oder teilweise erstrecken.

Gemäß einer bevorzugten Weiterbildung umfasst das Ventil ein Federelement, das mit dem zweiten Stößel gekoppelt ist und eine vorgegebene Federkraft auf den zweiten Stößel ausübt. Beispielsweise ist das Federelement als Spiralfeder ausgebildet und vorgespannt mit dem zweiten Stößel gekoppelt, sodass der zweite Ventilkörper aufgrund der wirkenden Federkraft stets in eine Offenstellung in Richtung des ersten Ventilkörper getrieben wird. In Abhängigkeit von der kontaktfreien, vorzugsweise magnetischen, Kopplung kann dann die Federkraft oder die Kopplungskraft überwiegen oder ein Kräftegleichgewicht zwischen den auf den ersten Stößel und den zweiten Stößel wirkenden Kräfte ausgebildet werden.

Gemäß einer bevorzugten Weiterbildung des Ventils ist eine auf den zweiten Stößel wirkende Federkraft des Federelements in Abstimmung auf die magnetische Kopplung zwischen dem ersten und dem zweiten Stößel vorgegeben ausgebildet, sodass in einem dritten Zustand des Ventils eine magnetische Kraft der magnetischen Kopplung die Federkraft des Federelements übersteigt und der erste Stößel und der erste Ventilkörper eine Offenstellung ausbilden und den zweiten Stößel und den zweiten Ventilkörper in eine Schließstellung treiben. Eine Bewegung des ersten und/oder des zweiten Stößels erfolgt daher auf Basis einer Kräftebilanz zwischen der Federkraft, der Magnetkraft und der durch einen Antrieb wirkenden Antriebskraft, die den ersten Stößel antreibt.

In einem ersten Zustand des Ventils befindet sich der erste Stößel mit dem ersten Ventilkörper in Schließstellung. Auf den zweiten Stößel mit dem zweiten Ventilkörper wirkt und überwiegt die Federkraft, welche den zweiten Stößel mit dem zweiten Ventilkörper in eine Offenstellung treibt. Zum Ausbilden des zweiten Zustands des Ventils wird der erste Stößel mit dem ersten Ventilkörper mittels eines Antriebs angetrieben und bildet eine Offenstellung aus. Auf den zweiten Stößel mit dem zweiten Ventilkörper wirkt weiterhin die Federkraft und gegebenenfalls auch schon eine magnetische Abstoßungskraft der sich angenäherten Magnetelemente der beiden Ventilkörper. Sofern die Federkraft weiterhin überwiegt oder ein Kräftegleichgewicht zwischen Antriebs- oder Haltekraft auf den ersten Stößel, Federkraft und magnetischer Kraft eingestellt ist, verbleibt auch der zweite Stößel mit dem zweiten Ventilkörper in einer Offenstellung. Zum Ausbilden des dritten Zustands des Ventils wird der erste Stößel mit dem ersten Ventilkörper mittels des Antriebs weiter angetrieben, sodass der erste Ventilkörper eine vollständige Offenstellung ausbildet. Auf den zweiten Stößel mit dem zweiten Ventilkörper wirkt dabei eine magnetische Kraft, die die Federkraft überwiegt und den zweiten Stößel mit dem zweiten Ventilkörper in seine Schließstellung treibt.

Auf diese Weise kann mittels eines Antriebs der erste Stößel aktiv und der zweite Stößel passiv angetrieben werden, um einen jeweiligen Ventilauslass freizugeben oder zu versperren und eine daran angeschlossene Abgasleitung zu öffnen oder zu verschließen.

Gemäß einem weiteren Aspekt umfasst ein Abgasführungssystem eine Ausgestaltung des zum Öffnen und Schließen einer Abgasleitung, das mit einem Ventileinlass mit einer Einlassleitung des Abgasführungssystems und mit einem Ventilauslass mit einer Auslassleitung des Abgasführungssystems strömungstechnisch gekoppelt ist. Beispielsweise ist das Abgasführungssystem als Rückführungssystem und/oder zur Nachbehandlung von Abgasen in einem Kraftfahrzeug angeordnet, um ein kontrolliertes Führen einer Abgasströmung zu ermöglichen. Da das Abgasrückführungssystem eine Ausgestaltung des Ventils umfasst, sind, sofern zutreffend, beschriebene Eigenschaften und Merkmale des Ventils auch für das Abgasrückführungssystem offenbart und umgekehrt.

Ausführungsbeispiele der Erfindung sind im Folgenden anhand der schematischen Zeichnungen näher erläutert. Es zeigen:
- Figur 1: eine schematische Darstellung eines Ventils zum Öffnen und Schließen einer Abgasleitung in einer perspektivischen An-sicht,
- Figur 2: ein Ausführungsbeispiel des Ventils nach Figur 1 in einer schematischen Schnittdarstellung,
- Figuren 3A-3C: verschiedene Zustände des Ventils nach Figur 1 und Figur 2 in einer jeweiligen schematischen Schnittdarstellung.

Elemente gleicher Konstruktion und Funktion sind figurenübergreifend mit denselben Bezugszeichen gekennzeichnet. Aus Gründen der Übersichtlichkeit sind gegebenenfalls nicht alle Elemente in sämtlichen Figuren mit zugehörigen Bezugszeichen gekennzeichnet.

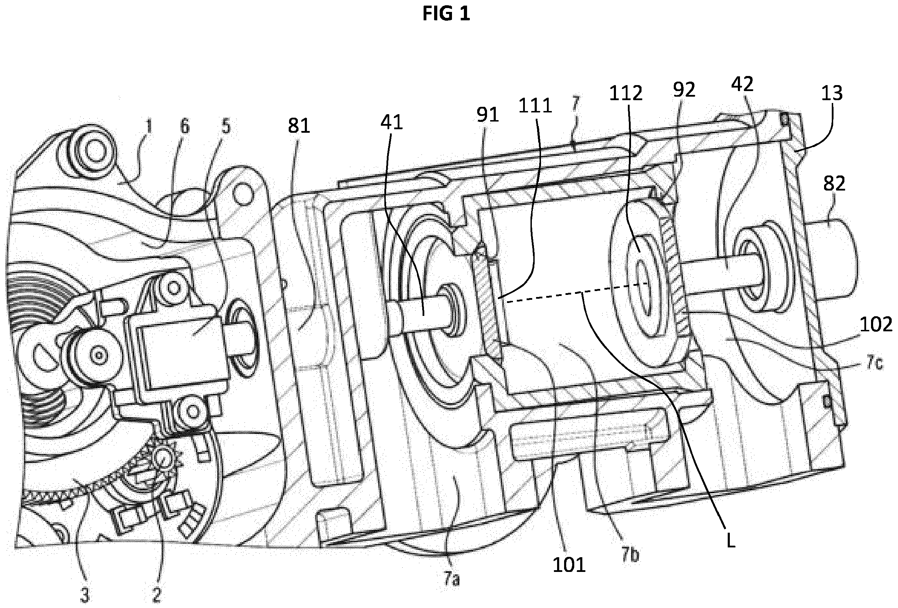

Figur 1 zeigt eine schematische Darstellung eines Ventils 100 zum Öffnen und Schließen einer Abgasleitung in einer perspektivischen Ansicht. Das Ventil 100 weist ein Gehäuse 1 auf, in dem ein Elektromotor 2 angeordnet ist. Mittels eines Getriebes 3 wird die Drehbewegung des Elektromotors 2 in eine lineare Bewegung eines ersten Stößels 41, der im Gehäuse 1 gelagert ist, umgewandelt. Am Getriebe 3 ist ein Sensor 5 angeordnet, der mit einem an dem ersten Stößel 41 befestigten Magneten zusammenwirkt. Der erste Stößel 41 erstreckt sich von einer Getriebekammer 6 bis in eine Ventilkammer 7, wobei der erste Stößel 41 an einer ersten Stelle 81 gelagert ist.

Das Ventil 100 weist weiter einen zweiten Stößel 42 auf, der beabstandet von dem ersten Stößel 41 innerhalb des Gehäuses 1 beweglich angeordnet ist. Der zweite Stößel 42 erstreckt sich durch eine Gehäuseabdeckung 13 bis in die Ventilkammer 7, wobei der zweite Stößel 42 an einer zweiten Stelle 82 gelagert ist.

Die Ventilkammer 7 besteht aus drei hintereinander liegenden Teilkammern 7a, 7b, 7c, die durch einen ersten und einen zweiten Ventilsitz 91 und 92 voneinander getrennt sind. An dem ersten Stößel 41 ist ein erster Ventilkörper 101 fest angeordnet, sodass er bei einer linearen Bewegung des ersten Stößels 41 entlang einer Längsachse L des ersten Stößels 41 an dem ersten Ventilsitz 91 anliegen und einen entsprechenden Ventilauslass 121 abdichten kann oder sich von dem ersten Ventilsitz 91 wegbewegen und den entsprechenden Ventilauslass 121 somit freigeben und ein Gas von der Ventilkammer 7 in eine Abgasleitung strömen kann.

An dem zweiten Stößel 42 ist ein zweiter Ventilkörper 102 fest angeordnet, sodass er bei einer linearen Bewegung des zweiten Stößels 41 entlang der Längsachse L an dem zweiten Ventilsitz 92 anliegen und einen entsprechenden Ventilauslass 121 abdichten kann oder sich von dem zweiten Ventilsitz 92 wegbewegen und den entsprechenden Ventilauslass 121 somit freigeben und ein Gas von der Ventilkammer 7 in eine weitere Abgasleitung strömen kann. Die Stößel 41 und 42 sind so in dem Gehäuse 1 angeordnet und ausgebildet, dass im Wesentlichen eine Öffnungsrichtung des ersten Ventilkörpers 101 einer Schließrichtung des zweiten Ventilkörpers 102 entspricht. Der erste und zweite Stößel 41 und 42 sind mechanisch nicht direkt verbunden und werden gegenläufig, das heißt in entgegengesetzter Richtung, bewegt um einen jeweilige Offenstellung oder Schließstellung auszubilden.

Im Folgenden wird das Ventil 100 gemäß einem Ausführungsbeispiel der Erfindung beschrieben, welches im Betrieb eine besonders kontrollierte Führung einer Abgasströmung durch das Ventil 100 hin zu anschließbaren Abgasleitungen ermöglicht. Das im Folgenden beschriebene Ventil 100 kann, muss aber nicht Merkmale der anhand von Figur 1 beschriebenen Ausgestaltung aufweisen. Es sei darauf hingewiesen, dass das Ventil 100 gemäß dem Ausführungsbeispiel alternativ zumindest teilweise auch anderweitige Ausgestaltungen haben kann, ohne dass sich Einschränkungen für die nachfolgende Beschreibung des Ausführungsbeispiels der Erfindung ergeben.

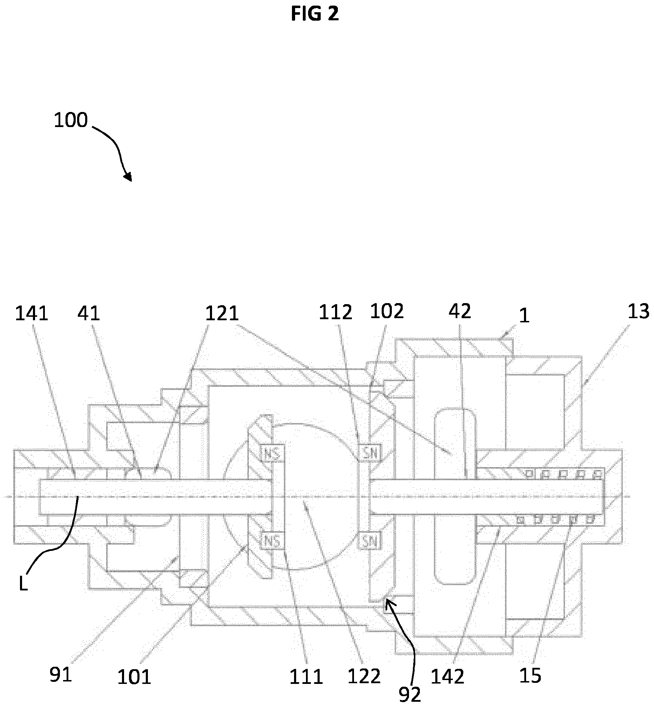

Figur 2 zeigt in einer schematischen Schnittdarstellung eine Seitenansicht des Ventils 100. Das Ventil 100 weist einen Ventileinlass 122 und zwei Ventilauslässe 121 auf, von denen jeweils einer dem ersten Ventilkörper 101 und einer dem zweiten Ventilkörper 102 zugeordnet ist. Der erste Stößel 41 ist mit einer ersten Buchse 141 gekoppelt und entlang der Längsachse L beweglich in dem Gehäuse 1 angeordnet. Der zweite Stößel 42 ist mit einer zweiten Buchse 142 gekoppelt und entlang der Längsachse L beweglich in dem Gehäuse 1 angeordnet.

Das Ventil 100 weist ferner ein Federelement 15 auf, welches in Ausgestaltung einer vorgespannten Spiralfeder in einer Ausnehmung der Gehäuseabdeckung 13 angeordnet ist. Das Federelement 15 umgibt einen Abschnitt des zweiten Stößels 42, der sich, wie auch die zweite Buchse 142, in die Ausnehmung der Gehäuseabdeckung 13 erstreckt. Das Federelement 15 ist somit zwischen der Gehäuseabdeckung 13 und dem zweiten Stößel 42 angeordnet und sicher geführt. Das Federelement übt eine im Wesentlichen konstante Federkraft auf die zweite Buchse 142 und den damit verbundenen zweiten Stößel 42 in Richtung des ersten Stößels 41 aus, um eine Offenstellung des zweiten Ventilkörpers 102 einzurichten.

Außerdem weist das Ventil 1 eine erstes und ein zweites Magnetelement 111 und 112 auf, wobei das erste Magnetelement 111 an dem ersten Ventilkörper 101 und das zweite Magnetelement 112 an dem ersten Ventilkörper 102 angeordnet ist. Die Magnetelemente 111 und 112 sind als ringförmige Permanentmagnete an einer jeweiligen Oberfläche des entsprechenden Ventilkörpers 101, 102 angeordnet, die einander zugewandt sind. Die Magnetringe sind dabei teilweise in den zugehörigen Ventilkörper 101, 102 eingelassen beziehungsweise teilweise in einer Ausnehmung des jeweiligen Ventilkörpers 101, 102 angeordnet, sodass sie sich teilweise über eine Oberfläche des Ventilkörpers 101, 102 hinaus erstrecken. Die Magnetelemente 111 und 112 bilden einen kontaktfreie, magnetische Kopplung zwischen den beiden Stößeln 41, 42 aus, sodass zumindest abschnittsweise eine Bewegung des ersten Stößels 41 eine Bewegung des zweiten Stößels 42 bedingt. Dabei sind die Magnetelemente 111, 112 mit gleicher Polausrichtung einander zugewandt, sodass bei ausreichender Annäherung des ersten und zweiten Stößels 41, 42 eine abstoßende magnetische Kraft zwischen den Ventilkörpern 101 und 102 wirkt, welche den zweiten Ventilkörper 102 und den zweiten Stößel 42 entgegen der Kraftrichtung der Federkraft in Richtung Gehäuseabdeckung 13 treibt.

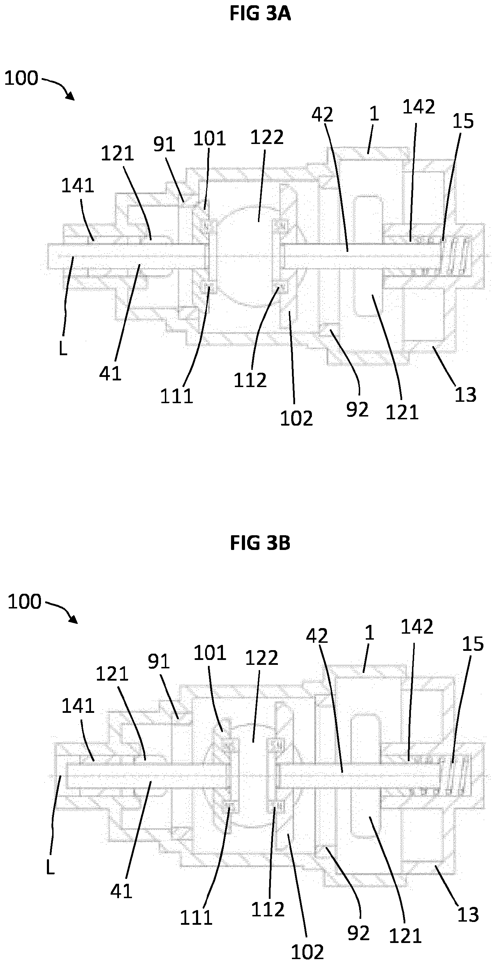

Die Figuren 3A bis 3C zeigen jeweils in einer schematischen Schnittdarstellung eine Seitenansicht des Ventils 100 in drei verschiedenen Zuständen. Figur 3A zeigt einen ersten Zustand des Ventils 100, in dem sich der erste Stößel 41 mit dem ersten Ventilkörper 101 in Schließstellung befindet. Auf den zweiten Stößel 42 mit dem zweiten Ventilkörper 102 wirkt und überwiegt die Federkraft, welche den zweiten Stößel 42 mit dem zweiten Ventilkörper 102 in eine Offenstellung treibt.

Figur 3B zeigt einen zweiten Zustand des Ventils 100, welcher durch Antrieben des ersten Stößels 41 mittels des Antriebes 2 ausbildbar ist. Der erste Stößel 41 wird angetrieben bis sich der erste Ventilkörper 101 von dem Ventilsitz 91 entfernt und den Ventileinlass 121 freigibt. Der erste Stößel 41, der Ventilkörper 101 und das daran befestigte erste Magnetelement 111 werden zusammen mittels des linearen Antriebs 2 in Richtung des zweiten Ventilkörpers 102 bewegt und bilden eine Offenstellung aus, die allerdings keine vollständige Offenstellung des ersten Ventilkörpers 101 realisiert. Auf den zweiten Stößel 42 mit dem zweiten Ventilkörper 102 wirkt weiterhin die Federkraft und gegebenenfalls auch schon eine magnetische Abstoßungskraft der sich angenäherten Magnetelemente 111, 112 der beiden Ventilkörper 101, 102. Sofern die Federkraft weiterhin überwiegt oder ein Kräftegleichgewicht zwischen der Antriebs- oder Haltekraft auf den ersten Stößel 41, der Federkraft und der magnetischen Kraft eingestellt ist, verbleibt auch der zweite Stößel 42 mit dem zweiten Ventilkörper 102 in einer Offenstellung, sodass beide Ventilkörper 101, 102 ihre zugehörigen Ventilauslassöffnungen 121 freigeben und eine entsprechende Abgasströmung ermöglichen.

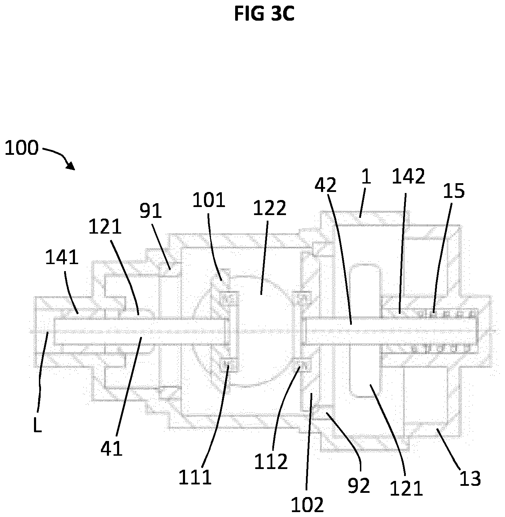

Zum Ausbilden eines dritten Zustands des Ventils 100 wird der erste Stößel 41 mit dem ersten Ventilkörper 101 mittels des Antriebs 2 weiter angetrieben, sodass der erste Ventilkörper 101 eine vollständige Offenstellung ausbildet (s. Figur 3C). Auf den zweiten Stößel 42 und den zweiten Ventilkörper 102 wirkt dabei eine magnetische Kraft, die die Federkraft des Federelements 15 überwiegt und den zweiten Stößel 42 mit dem zweiten Ventilkörper 102 in seine Schließstellung treibt.

Mittels des beschriebenen Ventils 100 ist im Betrieb eine besonders kontrollierte Führung einer Abgasströmung in unterschiedliche Abgasleitungen möglich, sodass eine Abgasströmung nutzbringend geführt und weiterverarbeitet werden kann. Das Ventil 100 ermöglicht eine indirekte Betätigung des zweiten Stößels 42 und des zweiten Ventilkörpers 102 und realisiert auf einfache und kostengünstige Weise einen Ventilaufbau zum Öffnen und Schließen von Abgasleitungen.

Eine Vielzahl der beschriebenen Komponenten des Ventils 100 kann aus Kunststoff angefertigt werden, sodass das Ventil 100 gewichtsleicht und kostengünstig herstellbar ist. Ein solches Ventil 100, das zumindest drei unterschiedliche Positionen der Stößel 41, 42 und der Ventilkörper 101, 102 ermöglicht, eignet sich insbesondere für Linear- oder Doppellinearventile in einem Abgasrückführungssystem. Es ist kostengünstig herstellbar und bietet ein modulares Konzept mit einem übersichtlichen und einfachen Aufbau.

### Bezugszeichenliste

- 1: Gehäuse
- 2: Elektromotor
- 3: Getriebe
- 41: erster Stößel
- 42: zweiter Stößel
- 5: Sensor
- 6: Getriebekammer
- 7: Ventilkammer
- 7a-7c: Teilkammer
- 81: erste Stelle
- 82: zweite Stelle
- 91: erster Ventilsitz
- 92: zweiter Ventilsitz
- 100: Ventil
- 101: erster Ventilkörper
- 102: zweiter Ventilkörper
- 111: erstes Magnetelement
- 112: zweites Magnetelement
- 121: Ventilauslass
- 122: Ventileinlass
- 13: Gehäuseabdeckung
- 141: erste Buchse
- 142: zweite Buchse
- 15: Federelement

- L: Längsachse

## Patentansprüche

1. Ventil (100) zum Öffnen und Schließen einer Abgasleitung, umfassend:
- ein Gehäuse (1),
- einen in dem Gehäuse (1) angeordneten ersten Stößel (41), der mit einem Antrieb (2) koppelbar ist und ausgebildet ist, mittels des Antriebs (2) entlang einer Längsachse (L) des ersten Stößels (41) bewegt zu werden,
- einen in dem Gehäuse (1) angeordneten zweiten Stößel (42), der beabstandet von dem ersten Stößel (41) ausgebildet ist, entlang einer Längsachse (L) des zweiten Stößels (4) bewegt zu werden,
- einen in dem Gehäuse (1) angeordneten ersten und zweiten Ventilsitz (91, 92), welche jeweils einen Ventilauslass (121) aufweisen, und
- einen ersten und einen zweiten Ventilkörper (101, 102), wobei der erste Ventilkörper (101) fest mit dem ersten Stößel (41) und der zweite Ventilkörper (102) fest mit dem zweiten Stößel (42) verbunden ist, sodass der jeweilige Ventilkörper (101, 102) durch eine Bewegung des jeweiligen Stößels (41, 42) zwischen einer Offenstellung, in der der jeweilige Ventilauslass (121) freigegeben ist, und einer Schließstellung betätigbar sind, wobei der erste und der zweite Ventilkörper (101, 102) in entgegengesetzter Richtung von der Offenstellung zur Schließstellung bewegbar sind,
- ein erstes und ein zweites Magnetelement (111, 112), wobei das erste Magnetelement (111) an dem ersten Ventilkörper (101) und das zweite Magnetelement (112) an dem zweiten Ventilkörper (112) angeordnet ist und die Magnetelemente (111, 112) zumindest abschnittsweise eine magnetische Kopplung zwischen dem ersten und dem zweiten Stößel (41, 42) ausbilden, wobei die Stößel (41, 42) kontaktfrei miteinander gekoppelt sind, sodass in einem ersten Zustand des Ventils (100) der erste Stößel (41) und der erste Ventilkörper (101) eine Schließstellung und der zweite Stößel (42) und der zweite Ventilkörper (102) eine Offenstellung ausbilden, und sodass in einem dritten Zustand des Ventils (100) der erste Stößel (41) und der erste Ventilkörper (101) eine Offenstellung ausbilden und den zweiten Stößel (42) und den zweiten Ventilkörper (102) in eine Schließstellung treiben,
**dadurch gekennzeichnet, dass**
in einem zweiten Zustand des Ventils (100) der erste Stößel (41) und der erste Ventilkörper (101) sowie der zweite Stößel (42) und der zweite Ventilkörper (102) eine Offenstellung ausbilden.

2. Ventil (100) nach Anspruch 1, bei dem die Stößel (41, 42) kontaktfrei miteinander gekoppelt sind und eine Bewegung des ersten Stößels (41) und des ersten Ventilkörpers (101) zumindest abschnittsweise eine Bewegung des zweiten Stößels (42) und des zweiten Ventilkörpers (102) bedingt.

3. Ventil (100) nach Anspruch 1 oder 2, bei dem das jeweilige Magnetelement (111, 112) als ringförmiger Permanentmagnet ausgebildet ist und an einer Oberfläche des jeweiligen Ventilkörpers (101, 102) angeordnet ist, die dem jeweiligen anderen Ventilkörper (101, 102) zugewandt ist.

4. Ventil (100) nach einem der Ansprüche 1 bis 3, bei dem das jeweilige Magnetelement (111, 112) als eine Mehrzahl stabförmiger Permanentmagnete ausgebildet ist und an einer Oberfläche des jeweiligen Ventilkörpers (101, 102) angeordnet ist, die dem jeweiligen anderen Ventilkörper (101, 102) zugewandt ist.

5. Ventil (100) nach einem der Ansprüche 1 bis 4, umfassend:
ein Federelement (15), das mit dem zweiten Stößel (42) gekoppelt ist und
eine vorgegebene Federkraft auf den zweiten Stößel (42) ausübt.

6. Ventil (100) nach einem der Ansprüche 1 bis 5 in Verbindung mit Anspruch 5, bei dem eine auf den zweiten Stößel (42) wirkende Federkraft des Federelements (15) in Abstimmung auf die magnetische Kopplung zwischen dem ersten und dem zweiten Stößel (41, 42) vorgegeben ausgebildet ist, sodass in einem dritten Zustand des Ventils (100) eine magnetische Kraft der magnetischen Kopplung die Federkraft des Federelements (15) übersteigt und der erste Stößel (41) und der erste Ventilkörper (101) eine Offenstellung ausbilden und den zweiten Stößel (42) und den zweiten Ventilkörper (102) in eine Schließstellung treiben.

7. Abgasführungssystem, umfassend:
- eine Einlassleitung und eine Auslassleitung zum Führen einer Abgasströmung, und
- eine Ausgestaltung des Ventils (100) nach einem der Ansprüche 1 bis 6, das mittels eines Ventileinlasses (122) mit der Einlassleitung und mittels eines Ventilauslasses (121) mit der Auslassleitung strömungstechnisch gekoppelt ist.

## Claims

1. Valve (100) for opening and closing an exhaust line, comprising:
- a housing (1),
- a first plunger (41), which is arranged in the housing (1) and can be coupled to a drive (2) and is designed to be moved by means of the drive (2) along a longitudinal axis (L) of the first plunger (41),
- a second plunger (42), which is arranged in the housing (1) and, spaced apart from the first plunger (41), is designed to be moved along a longitudinal axis (L) of the second plunger (4),
- a first and second valve seat (91, 92), which are arranged in the housing (1) and each have a valve outlet (121), and
- a first and a second valve body (101, 102), wherein the first valve body (101) is fixedly connected to the first plunger (41) and the second valve body (102) is fixedly connected to the second plunger (42), so that the respective valve body (101, 102) can, by way of a movement of the respective plunger (41, 42), be actuated between an open position, in which the respective valve outlet (121) is opened up, and a closed position, wherein the first and second valve bodies (101, 102) can be moved in the opposite direction from the open position to the closed position,
- a first and a second magnet element (111, 112), wherein the first magnet element (111) is arranged on the first valve body (101) and the second magnet element (112) is arranged on the second valve body (112), and the magnet elements (111, 112) form, at least sectionally, a magnetic coupling between the first and the second plunger (41, 42), wherein
the plungers (41, 42) are coupled to one another without contact, so that, in a first state of the valve (100), the first plunger (41) and the first valve body (101) form a closed position and the second plunger (42) and the second valve body (102) form an open position,
and so that, in a third state of the valve (100), the first plunger (41) and the first valve body (101) form an open position and drive the second plunger (42) and the second valve body (102) into a closed position,
**characterized in that**,
in a second state of the valve (100), the first plunger (41) and the first valve body (101) and also the second plunger (42) and the second valve body (102) form an open position.

2. Valve (100) according to Claim 1, wherein the plungers (41, 42) are coupled to one another without contact and a movement of the first plunger (41) and the first valve body (101) causes, at least sectionally, a movement of the second plunger (42) and the second valve body (102).

3. Valve (100) according to Claim 1 or 2, wherein the respective magnet element (111, 112) is formed as a ring-shaped permanent magnet and is arranged on a surface of the respective valve body (101, 102), which surface faces towards the respective other valve body (101, 102).

4. Valve (100) according to one of Claims 1 to 3, wherein the respective magnet element (111, 112) is formed as a plurality of rod-shaped permanent magnets and is arranged on a surface of the respective valve body (101, 102), which surface faces towards the respective other valve body (101, 102) .

5. Valve (100) according to one of Claims 1 to 4, comprising:
a spring element (15) which is coupled to the second plunger (42) and exerts a predefined spring force on the second plunger (42).

6. Valve (100) according to one of Claims 1 to 5 in conjunction with Claim 5, wherein a spring force of the spring element (15) acting on the second plunger (42) is configured so as to be predefined in a manner matched to the magnetic coupling between the first and the second plunger (41, 42), so that, in a third state of the valve (100), a magnetic force of the magnetic coupling exceeds the spring force of the spring element (15), and the first plunger (41) and the first valve body (101) form an open position and drive the second plunger (42) and the second valve body (102) into a closed position.

7. Exhaust-gas guiding system comprising:
- an inlet line and an outlet line for guiding an exhaust-gas flow, and
- an embodiment of the valve (100) according to one of Claims 1 to 6, which is coupled in terms of flow by means of a valve inlet (122) to the inlet line and by means of a valve outlet (121) to the outlet line.

## Revendications

1. Vanne (100) destinée à ouvrir et fermer une conduite de gaz d'échappement, ladite vanne comprenant :
- un boîtier (1),
- un premier poussoir (41) qui est disposé dans le boîtier (1), qui peut être accouplé à un entraînement (2) et qui est destiné à être déplacé au moyen de l'entraînement (2) le long d'un axe longitudinal (L) du premier poussoir (41),
- un deuxième poussoir (42) qui est disposé dans le boîtier (1) et qui est conçu à distance du premier poussoir (41) pour être déplacé le long d'un axe longitudinal (L) du deuxième poussoir (4),
- des premier et deuxième sièges de vanne (91, 92) qui sont disposés dans le boîtier (1) et qui comportent chacun une sortie de vanne (121), et
- des premier et deuxième corps de vanne (101, 102), le premier corps de vanne (101) étant relié de manière fixe au premier poussoir (41) et le deuxième corps de vanne (102) étant relié de manière fixe au deuxième poussoir (42) de manière à ce que le corps de vanne respectif (101, 102) puisse être actionné par un mouvement du poussoir respectif (41, 42) entre une position ouverte, dans laquelle la sortie de vanne respective (121) est libérée, et une position fermée, les premier et deuxième corps de vanne (101, 102) pouvant être déplacés dans des sens opposés de la position ouverte à la position fermée,
- des premier et deuxième éléments magnétiques (111, 112), le premier élément magnétique (111) étant disposé sur le premier corps de vanne (101) et le deuxième élément magnétique (112) étant disposé sur le deuxième corps de vanne (112) et les éléments magnétiques (111, 112) formant au moins par portions un couplage magnétique entre les premier et deuxième poussoirs (41, 42),
les poussoirs (41, 42) étant accouplés l'un à l'autre sans contact de manière à ce que, dans un premier état de la vanne (100), le premier poussoir (41) et le premier corps de vanne (101) forment une position fermée et le deuxième poussoir (42) et le deuxième corps de vanne (102) forment une position ouverte,
et de manière à ce que, dans un troisième état de la vanne (100), le premier poussoir (41) et le premier corps de vanne (101) forment une position ouverte et entraînent le deuxième poussoir (42) et le deuxième corps de vanne (102) dans une position fermée, **caractérisée en ce que**
dans un deuxième état de la vanne (100), le premier poussoir (41) et le premier corps de vanne (101) ainsi que le deuxième poussoir (42) et le deuxième corps de vanne (102) forment une position ouverte.

2. Vanne (100) selon la revendication 1, dans laquelle les poussoirs (41, 42) sont accouplés entre eux sans contact et un mouvement du premier poussoir (41) et du premier corps de vanne (101) cause au moins par portions un mouvement du deuxième poussoir (42) et du deuxième corps de vanne (102).

3. Vanne (100) selon la revendication 1 ou 2, dans laquelle l'élément magnétique respectif (111, 112) est conçu comme un aimant permanent annulaire et est disposé sur une surface du corps de vanne respectif (101, 102) qui est dirigée vers l'autre corps de vanne respectif (101, 102).

4. Vanne (100) selon l'une des revendications 1 à 3, dans laquelle l'élément magnétique respectif (111, 112) est conçu comme une pluralité d'aimants permanents en forme de tige et est disposé sur une surface du corps de vanne respectif (101, 102) qui est dirigée vers l'autre corps de vanne respectif (101, 102).

5. Vanne (100) selon l'une des revendications 1 à 4, comprenant :
un élément à ressort (15) qui est accouplé au deuxième poussoir (42) et qui exerce une force de ressort spécifiée sur le deuxième poussoir (42).

6. Vanne (100) selon l'une des revendications 1 à 5 en liaison avec la revendication 5, dans laquelle une force de ressort de l'élément à ressort (15) agissant sur le deuxième poussoir (42) est conçue en coordination avec l'accouplement magnétique entre le premier et le deuxième poussoir (41, 42) de manière à ce que, dans un troisième état de la vanne (100), une force magnétique de l'accouplement magnétique devienne supérieure à la force de ressort de l'élément à ressort (15) et le premier poussoir (41) et le premier corps de vanne (101) forment une position ouverte et entraînent le deuxième poussoir (42) et le deuxième corps de vanne (102) dans une position fermée.

7. Système de guidage de gaz d'échappement, comprenant :
- une conduite d'admission et une conduite de sortie destinées à guider un flux de gaz d'échappement, et
- un mode de réalisation de la vanne (100) selon l'une des revendications 1 à 6, dans lequel la vanne est accouplée fluidiquement à la conduite d'admission au moyen d'une entrée de vanne (122) et à la conduite de sortie au moyen d'une sortie de vanne (121).
